(19) Europäisches Patentamt
European Patent Office
Office européen des brevets

(11) Publication number: **0 218 365**
**B1**

(12) **EUROPEAN PATENT SPECIFICATION**

(45) Date of publication of patent specification: 29.08.90

(51) Int. Cl.$^5$: C 09 J 201/00, C 08 F 255/00

(21) Application number: 86306779.9

(22) Date of filing: 02.09.86

(54) **Acrylic adhesives and sealants with improved hot strength.**

(30) Priority: 05.09.85 GB 8522042

(43) Date of publication of application:
15.04.87 Bulletin 87/16

(45) Publication of the grant of the patent:
29.08.90 Bulletin 90/35

(84) Designated Contracting States:
BE DE FR IT NL

(56) References cited:
US-A-4 113 792

(73) Proprietor: National Starch and Chemical Investment Holding Corporation
10 Finderne Avenue
Bridgewater, New Jersey 08807 (US)

(72) Inventor: Baldwin, Terrence Reginald
5 Brook Way
Romsey Hampshire SO5 8JZ (GB)

(74) Representative: Lambert, Hugh Richmond et al
D. YOUNG & CO. 10 Staple Inn
London, WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 218 365 B1

## Description

This invention relates to acrylic adhesive and sealant compositions with improved hot strength and in particular toughened acrylic adhesives and sealants containing chlorosulphonated polyethylene as a toughening agent.

Toughened two part acrylic adhesive compositions of this general type are disclosed in US—A—3,890,407, US—A—3,962,372, US—A—4,112,013 and US—A—4,118,346, whilst toughened one part, anaerobic acrylic adhesives of this general type are disclosed in GB—A—1,505,348.

Present toughened acrylic adhesives and sealants of this type are limited to relatively low temperature applications, i.e. to applications where the bonded substrate is not likely to be exposed to temperatures much above 120°C, and certainly not for any length of time. Under such conditions, i.e. above about 120°C for prolonged periods of time, such toughened acrylics lose their mechanical strength and since many commercial painting operations involve stoving the painted substrate for periods of up to one hour or more at 180°C, the use of such toughened acrylics in the construction and bonding of such substrates has been limited.

One approach, in the case of toughened acrylics containing chlorosulphonated polyethylene (Hypalon®) as the toughening agent, has been to replace the toughening agent with a more thermally stable rubber but this approach suffers from the disadvanage that the over all performance of the adhesive is degraded, in particular, longer handling time, slower cures and reduced ultimate bond strength. In EP—A—0 044 166 for example a styrene-butadiene block copolymer is proposed as a toughening agent in such compositions.

Another approach has been to add an epoxy resin to the monomer, but this suffers from the disadvantage that at the levels of epoxy resin necessary to give improved resistance to thermal degradation, the normal properties of the adhesive are again beginning to suffer and losses in the rate of cure and in the ultimate bond strength begin to be noticeable.

One of the problems associated with the use of chlorosulphonated polyethylene as toughening agents in such compositions is that they do release acid at elevated temperatures and this tends to degrade or destroy the polymeric matrix. A similar problem exists when other acid-releasing polymers such as polyvinylchloride or chloroprene are incorporated into such adhesives, not necessarily as toughening agents, but for other purposes such as viscosity modifiers etc.

In accordance with the present invention, we have found that the hot strength of acrylic adhesives and sealants containing chlorosulphonated polyethylene or other acid releasing polymers can be improved by incorporating into the acrylic monomer an epoxidised acrylate or methacrylate. Although we do not wish to be bound by any theory, it is believed that upon heating such epoxy-containing acrylic adhesives to a temperature in the range 120—150°C the epoxy rings in the ester moiety open up, catalysed by acid released from the acid releasing polymer thereby to cause additional grafting between the polymer and the acrylic phase, with a consequent increase its hot strength.

At this point, the existence of US—A—4,113,792 has to be acknowledged, but it also has to be pointed out that that patent relates to adhesive systems of a totally different type, namely pressure sensitive adhesives. Such adhesives essentially contain a major amount (50 to 85%) of a *preformed* pressure sensitive polymer, as compared with the present systems which, apart from the polymeric toughening agent, are wholly *monomeric*. In US—A—4,113,792, it is pointed out that pressure sensitive adhesives based on preformed acrylate polymers have an inherently low cohesive strength, are thermoplastic, i.e. soften when heated, and are non-resistant to organic fluids, all of which restrict the utility of such pressure sensitive adhesives. According to US—A—4,113,792, such properties may be improved by adding to the preformed pressure sensitive acrylic polymer from 4 to 24% of chlorosulphonated polyethylene, and from 11 to 40% of a polymerisable vinyl monomer, including *inter alia* epoxidised vinyl monomers, such as glycidyl acrylate or methacrylate. Such systems are therefore essentially preformed polymeric systems containing a proportion of a multifunctional vinyl monomer which acts as a cross-linking agent to overcome the disadvantages inherent in a pressure sensitive adhesive and arising from the use of a preformed polymer as the pressure sensitive component, and are quite different from the curable, essentially monomeric systems of the present invention.

In accordance with this invention, therefore, there is provided a curable acrylic adhesive composition, which may be either a one-part or two-part composition, such composition consisting essentially of a polymerisable mixture of acrylic monomers comprising one or more acrylate or methacrylate esters and optionally one or more of acrylic or methacrylic acid, said polymerisable mixture having in solution therein a chlorosulphonated polyethylene or other acid releasing polymer as a toughening agent for the cured adhesive, and a free radical initiator and accelerator system capable, when mixed with the monomeric component of the adhesive composition, of initiating the polymerisation of the monomeric component, wherein the polymerisable mixture of acrylic monomers contains from 2.5 to 83% by weight, preferably from 5 to 50% by weight, based on the total monomer weight, more preferably from 10 to 25%, of an epoxidised acrylate or methacrylate as a comonomer effective to increase the hot strength of the cured composition.

The preferred epoxidised acrylic monomers used in the present invention are glycidyl acrylate and methacrylates, and acrylates and methacrylates containing an epoxidised ester moiety derived from a

dicyclopentenyl or dicyclopentenyloxyalkyl group, viz. an unsaturated group of the formula:

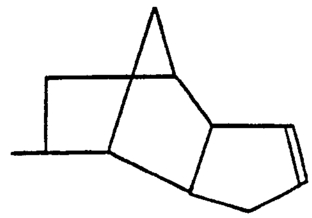

or

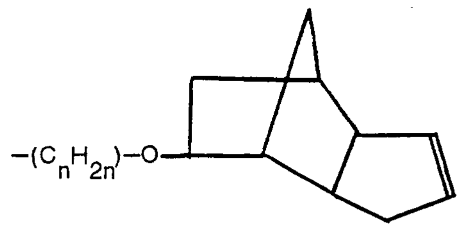

where n is an integer, preferably an integer of from 1 to 5, more preferably 2 to 4. Preferably the alkyl group provides a chain of at least two carbon atoms between the oxygen atoms, viz. ethyl, n-propyl, isopropyl etc. For convenience herein such radicals are referred to throughout this specification and claims as dicyclopentenyl and dicyclopentenyloxyalkyl, by analogy with their common progenitor, viz. dicylopentadiene. However, their systematic and proper nomenclature is, respectively

tricyclo[5.2.1.$0^{2,6}$]-3-decen-8-yl and
ω-(tricyclo[5.2.1.$0^{2,6}$]-3-decen-8-yloxy)alkyl.

The most preferred epoxidised acrylic monomers used in the invention are epoxidised dicyclopentenyl acrylate and methacrylate, and epoxidised dicyclopentenyloxyethyl acrylate and methacrylate, more especially the methacrylates. The preferred epoxidised dicyclopentenyl methacrylate and epoxidised dicyclopentenyloxyethyl methacrylate monomers are represented by the formulae I and II respectively:

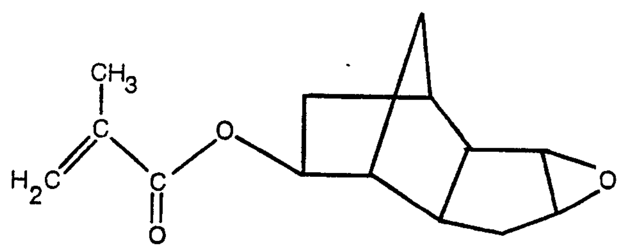

I

Dicyclopentenyl Methacrylate Epoxide (DCPME)

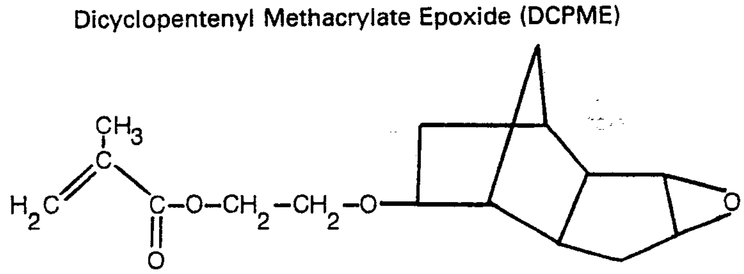

II

Dicylopentenyloxyethyl Methacrylate Epoxide (DCPOEME)

These monomers may readily be prepared by traditional esterification routes, e.g. by the reaction of methacrylic (or acrylic) acid and dicyclopentadiene alcohol, followed by epoxidation of the ethylenically unsaturated bond remaining in the ester moiety with peracetic acid.

Whilst, as already indicated, the preferred epoxidised monomers are DCPME and DCPOEME, and also glycidyl methacrylate, other epoxidised acrylate ester monomers may also be used containing in the ester moiety an acid sensitive epoxy ether group

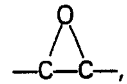,

which opens up during heating or stoving of the cured adhesive catalysed by the release of acid from the acid releasing polymer, thereby to promote grafting between the polymer and the acrylic matrix. Generally speaking such epoxidised acrylic ester monomers will be derived from alkenyl, alkenyloxyalkyl, cycloalkenyl and cycloalkenyloxyalkyl acrylates and methacrylates, particularly monoalkenyl, monoalkenyloxyalkyl, cyclomonoalkenyl and cyclomonoalkenyloxyalkyl acrylates and methacrylates by epoxidisation of the ethylenically unsaturated linkage in the ester moiety by reaction with peracetic acid. For the avoidance of doubt, the term "cycloalkenyl" is used herein to include both mono and polycyclic aliphatic ring systems containing at least one ethylenically (non-aromatic) unsaturated double bond. Over all the epoxidised ester moiety may contain from 3 to 20 carbon atoms, preferably from 3 to 15. Typically suitable acyclic moieties are epoxidised moieties obtained from the lower monoalkenyl and monoalkenyloxyalkyl groups, i.e. mono ($C_3$—$C_6$) alkenyl and mono ($C_3$—$C_6$) alkenyl ($C_1$—$C_6$) oxyalkyl. Typical cyclic moieties are epoxidised moieties obtained from monocycloalkenes containing from 5 to 8 ring carbon atoms, and from polycycloalkenes containing from 10 to 18 ring carbon atoms arranged in 2 or 3 fused rings, and such monocycloalkene and polycycloalkene ring structures linked to the acrylic or methacrylic acid moiety via a lower ($C_1$—$C_6$) oxyalkylene group. Included within the term cycloalkenyl and cycloalkenyloxyalkyl are ring structures in which one or more ring carbon atoms may be substituted by non-interfering substituents, e.g. $C_1$—$C_6$ alkyl groups.

Whilst the epoxidised monomer may be present in amounts up to 100% by weight, based on the total monomer content, the epoxidised monomer preferably constitutes no more than 50% of the total monomer content, the balance comprising non-epoxidised acrylates and methacrylates and optionally acrylic or methacrylic acid. For this purpose there may be used any of the acrylate or methacrylate esters mentioned in the publications previously referred to, optionally and usually in admixture with acrylic and/or methacrylic acid as an adhesion promoter. Thus typical acrylic monomers for use in this invention are alkyl, cycloalkyl, alkoxyalkyl and hydroxyalkyl acrylates and methacrylates, and alkylene and polyalkylene diacrylates and dimethacrylates. Specific examples are: $C_1$—$C_8$ alkyl acrylates and methacrylates, particularly methyl, ethyl, propyl, n-butyl, isobutyl and ethylhexyl methacrylates, $C_2$—$C_3$ hydroxyalkyl acrylates and methacrylates, particularly hydroxyethyl methacrylate, $C_1$—$C_5$ alkoxy ($C_1$—$C_5$) alkyl methacrylates e.g. ethoxyethyl methacrylate, lauryl methacrylate, tetrahydrofurfuryl methacrylate, isobornyl methacrylate, and poly($C_2$—$C_3$) alkylene dimethacrylates, e.g. triethyleneglycol dimethacrylate. Particularly preferred acrylic monomer combinations for use in this invention are combinations of (a) an acrylate ester selected from one or more of the following: methyl methacrylate, isobornyl methacrylate, 2-ethoxyethyl methacrylate, tetrahydrofurfuryl methacrylate and triethyleneglycol dimethacrylate, and (b) methacrylic acid.

Although chlorosulphonated polyethylene is preferred as the acid releasing polymer, to promote the toughness of the cured composition, other acid releasing polymers may also be used, for example, polychloropropene or an elastomer, such as acrylonitrile-butadiene or styrene-butadiene, which contains terminal or pendant sulphonyl chloride (—$SO_2Cl$) groups. Amounts of polymeric additive may range from 5 to 50% by weight, based on the weight of monomer, more usually 10 to 35%.

Included in the adhesive composition, either as a separate component or wholly or partly in admixture with the monomeric component, will be a free radical catalyst initiator system capable of initiating the free radical polymerisation of the monomer. Usually the free radical catalyst initiator system will include an organic peroxide or hydroperoxide, or an organic peracid or perester. Typical and preferred peroxy compounds are cumene hydroperoxide and t-benzyl benzoate, although a wide variety of other peroxy compounds can be used. Such peroxy compounds will usually, but not necessarily, be used in combination with one or more tertiary amine or amine-aldehyde accelerators and/or with promoters such as copper or cobalt naphthenate or quinolinolate to complete the initiator system, and depending on the nature of the adhesive, i.e. one part or two part.

Also included in the compositions will be the usual range of optional components such as polymerisation inhibitors, accelerators, diluents, thickeners, viscosity modifiers, epoxy resins etc. Such additions are conventional and do not need to be elucidated here in any detail.

The invention is particularly applicable to two part acrylic adhesives comprising, as the first part, the solution of chlorosulphonated polyethylene or other acid releasing polymer in the acrylate monomer, and as the second part, an accelerator, almost invariably an amine-aldehyde condensate, such as the aniline-butyraldehyde condensate produced and sold under the trade name Vanax® 808, and which can be premixed with the monomer component immediately before use, or more usually, applied as a primer to one or both surfaces to be bonded. Other suitable amine-aldehyde condensates are listed in US—A—3,591,438. If desired part of the monomer can be formulated as the second component in admixture with the amine-aldehyde condensate plus other optional and conventional ingredients.

The invention is illustrated by the following Examples.

## Example 1

A conventional acrylic adhesive composition, Composition A, was prepared having the following formulation:

| | wt% |
|---|---|
| methyl methacrylate | 50.73 |
| triethyleneglycol dimethacrylate | 0.95 |
| butylated hydroxy toluene | 0.20 |
| chlorosulphonated polyethylene (Hypalon® 20) | 33.34 |
| diglycidyl ether of bisphenol A (Dow® 331) | 4.76 |
| methacrylic acid | 9.52 |
| cumene hydroperoxide | 0.50 |

A series of adhesive compositions according to the present invention were then prepared with progressively increasing amounts of epoxidised dicyclopentenyl methacrylate (DCPME), viz: 2.5%, 5%, 10%, 15%, such percentages being based on the total content of acrylic monomers, and with a corresponding reduction in the amount of methyl methacrylate. In other words, the four test compositions according to this invention contained, respectively, 48.23, 45.73, 40.73 and 35.73% methyl methacrylate.

Using the conventional aniline-butyraldehyde condensate, Vanax® 808, as the second component the adhesive compositions were applied between steel laps in a conventional manner, i.e. by applying the amine-aldehyde condensate as a primer to one surface and the adhesive as a bead to the other surface, which were then clamped together at room temperature until handling strength was achieved. The bonded steel laps were then tested for shear strength after exposure to 180°C for one hour, lap shear strength being measured at 180°C. The results were as follows:

| % DCPME | Hot lap shear strength $MNm^{-2}$ |
|---|---|
| 0=Composition A | 0.57 |
| 2.5 | 0.75 |
| 5 | 0.71 |
| 10 | 1.67 |
| 15 | 7.20 |

Compared with the conventional formulation, Composition A, the increased lap shear strength at elevated temperatures, such as might be encountered in a conventional stoving operation, is clearly demonstrated.

Further comparative tests were carried out to compare the hot strength of a composition according to this invention (Composition A above but with 15% DCPME in place of the corresponding amount of methyl methacrylate) at various temperatures with the hot strength of the conventional formulation, Composition A, a commercially available two part acrylic adhesive, Loctite 341, and a commercial single part epoxy resin adhesive, Permabond ESP 110, the latter known to produce adequate hot strength in stoving operations. The tests were carried out on steel laps, assembled as previously described or in accordance with the manufacturers instructions as the case may be, and after exposure to the temperature stated for one hour, the tests being performed at that temperature. The results are as follows:

| Adhesive | Lap shear strength $MNm^{-2}$ | | | |
|---|---|---|---|---|
| | 120°C | 150°C | 180°C | 210°C |
| Composition A | 6.51 | 3.72 | 0.57 | 0.14 |
| Test sample 15% DCPME | 9.95 | 9.08 | 7.20 | 0.34 |
| Loctite 341 | 3.04 | 1.92 | 1.21 | 0.55 |
| Permabond ESP 110 | 18.63 | 4.25 | 2.26 | 1.80 |

These results further demonstrate the superior hot strengths achievable with compositions according to this invention.

In another, separate, series of tests, the hot strength of the compositions, (i.e. Compositon A above but with various levels of DCPME to replace the same amount of methyl methacrylate) under the same conditions, i.e. at 180°C after exposure to 180°C for various times as specified, were measured for varying concentrations of DCPME. These results were as follows:

| Time at 180°C hours | Test type (see footnote) | % DCPME | | | | |
|---|---|---|---|---|---|---|
| | | 11 | 12 | 13 | 14 | 15 |
| 0.5 | A | 180 | | | | 170 |
| 1 | A | 170 | | | | 165 |
| 1 | B | | 2.71 | 2.90 | 3.29 | 3.39 |
| 3 | A | 160 | | | | 145 |
| 3 | B | | | | | 1.69 |
| 3 | C | | | | | 22.7 |

Footnote:
Test A: Peel strength in N/25 mm measured on aluminium after cooling to room temperature.
Test B: Lap shear strength measured hot (180°C) on steel, results in $MNm^{-2}$.
Test C: Lap shear strength measured on aluminium at room temperature, results in $MNm^{-2}$.

These show an increasing hot strength with increasing levels of DCPME and correspondingly increasing levels of cross-linking, but with some evidence of sensitivity to the nature of the substrate.

Further tests were carried out to show the effect of the substrate on strength loss on heat ageing. The tests were carried out on Composition A as defined above but with 15% of DCPME in place of the same amount of methyl methacrylate. The results are as follows:

| Temperature °C | Exposure time (hours) | Lap shear strength, $MNm^{-2}$, after cooling to ambient temperature | Substrate |
|---|---|---|---|
| 180 | 0.5 | 27.6 | Steel |
| | 1.0 | 27.1 | Steel |
| | 2.0 | 6.9 | Steel |
| | 3.0 | 1.7 | Steel |
| | 24.0 | 0.9 | Steel |
| 150 | 0.5 | 29.0 | Steel |
| | 1.0 | 33.1 | Steel |
| | 2.0 | 29.7 | Steel |
| | 3.0 | 32.7 | Steel |
| | 7.0 | 29.2 | Steel |
| | 24.0 | 11.5 | Steel |
| 180 | 3.0 | 22.7 | Aluminium |
| | 24.0 | 22.7 | Aluminium |

Degradation of the system is clearly faster on steel substrates. A further test was run with joints being exposed to 180°C for 500 hours.

| | |
|---|---|
| Hot strength at 180°C on steel laps | 1.22 $MNm^{-2}$ |
| Strength at ambient temperature after cooling from 180°C on steel laps | 3.88 $MNm^{-2}$ |
| Strength at ambient temperature after cooling from 180°C on steel impact blocks | 12 kg.f.cm |

This confirmed that with long term exposure to high temperatures on steel substrates the system became brittle and of low strength.

Example 2

A two part acrylic adhesive, modified in accordance with this invention, was prepared comprising as the first part:

| | wt% |
|---|---|
| 2-ethoxyethyl methacrylate | 34.17 |
| isobornyl methacrylate | 4.00 |
| epoxidised dicyclopentenyl methacrylate DCPME | 15.00 |
| methacrylic acid | 9.52 |
| triethyleneglycol dimethacrylate | 0.95 |
| chlorosulphonated polyethylene (Hypalon® 20) | 30.00 |
| diglycidyl ether of bisphenol A (Dow® 331) | 4.76 |
| butylated hydroxy toluene | 1.00 |
| cumene hydroperoxide | 0.50 |
| oxalic acid | 0.10 |

Tests were carried out with this adhesive, using aniline-butyraldehyde (Vanax® 808) as the accelerator, and the results compared with the unmodified adhesive formulation, i.e. in which the DCPME was replaced by the same quantity, i.e. 15% by weight, of additional isobornyl methacrylate, making a total isobornyl methacrylate content of 19% by weight. The results obtained were as follows:

| | Unmodified composition (0% DCPME) | Modified composition (15% DCPME) |
|---|---|---|
| Handling time (minutes)—steel | 3—3.5 | 1.5—2 |
| Handling time (minutes)—glass | 3.5—4 | 2—2.5 |
| Lap shear, steel, $MNm^{-2}$, cure 24th at 23°C | 15.2 | 130 |
| Peel strength, aluminium, N/25 mm, cure 24h at 23°C | 150 | 130 |
| Impact strength, steel, kg.f.cm., cure 24h at 23°C | 95 | 90 |
| Lap shear, steel, $MNm^{-2}$, measured hot after 1h at 180°C | 0 | 1.33 |

These results show that DCPME is not specific to methyl methacrylate matrices, and does not retard cure speed. In fact it may be beneficial. The results also show that there is no significant difference in bond strength at room temperature cure, but a measurable degree of hot strength in the modified composition at 180°C against zero hot strength of the unmodified composition.

Example 3

Using the modified and unmodified (Composition A) adhesive compositions of Example 1, further tests have been carried out to compare the humidity and salt spray resistance of bonded joints comprising the two adhesives. The results are as follows:

| | % Strength retention after 1000h exposure | |
|---|---|---|
| | 40°C 95% R.H. | 5% Salt spray |
| Composition A | 83% | 25% |
| Modified composition (15% DCPME) | 99% | 79% |

Example 4

Laboratory tests were carried out to monitor the softening/hot strength relationship of the modified composition of Example 1 (15% DCPME) in comparison with a commercial single part epoxy ESP 110 (Permabond Adhesives Limited) known to provide adequate hot strength for stoving operations. The results clearly demonstrate that although the modified adhesive composition of this invention softens, the hot strength develops sufficiently rapidly to ensure that the bond strength does not drop below the acceptable standard set by ESP 110. These results have been confirmed in the course of trials by a UK vehicle manufacturer where bonded vehicle components manufactured using the modified version of Composition A, i.e. containing 15% DCPME have been successfully stoved at temperatures up to 190°C.

Example 5

The importance of the epoxy group in the epoxidised monomer has been demonstrated by comparing the bond strengths of adhesive compositions containing the corresponding unepoxidised monomers: dicyclopentenyl methacrylate (DCPM) and dicyclopentenyloxymethyl methacrylate (DCPOEM), with the epoxidised monomers: epoxidised dicyclopentenyl methacrylate (DCPME) and epoxidised dicyclopentenyloxyethyl methacrylate (DCPOEME). The basic, unmodified, adhesive formulation was as set out in Example 1, Composition A, modified for the purposes of this test by partially replacing methyl methacrylate with an equivalent amount (15%) of DCPOEM, DCPOEME, DCPM and DCPME. The results are as follows:

| Composition A modified by partial replacement of MMA with: | DCPOEM 15% | DCPOEME 15% | DCPM 15% | DCPME 15% |
|---|---|---|---|---|
| Lap shear, $MNm^{-2}$, steel, 24h cure 23°C | 20.0 | 23.7 | | 23.8 |
| Lap shear, $MNm^{-2}$, steel, hot strength at 180°C | 0 | 1.06 | 0.76 | 2.29 |
| Lap shear, $MNm^{-2}$, room temperature strength after 1h at 180°C | 1.6 | 29.4 | | 27.6 |
| Peel N/25 mm, Al., 24h cure 23°C | 167 | 202 | | 197 |
| Peel N/25 mm, Al., room temperature strength after 1h at 180°C | | 183 | | 152 |

The epoxy group is clearly necessary to give both hot strength and thermal durability. These results also demonstrate the operability of the alternative epoxy acrylate monomer: epoxidised dicyclopentenyloxyethyl methacrylate.

The importance of the epoxy group in the monomer was further demonstrated by comparing compositions according to this invention, Composition A above modified by the inclusion of 10% DCPME in place of the corresponding amount of methyl methacrylate, with Composition A containing an additional 10% by weight, based on the total composition, of a novolac epoxy resin DEN 438 (from Shell Chemical) known for its ability to provide superior hot strength compared with the usual diglycidyl ether of bisphenol A (Dow® 331). The results obtained are as follows:

| | Lap shear strength $MNm^{-2}$ steel laps at 180°C |
|---|---|
| Composition A, modified with 10% DCPME replacement of MMA | 1.67 |
| Composition A, modified by 10% addition of DEN 438 | 0.99 |

The result clearly demonstrates the importance of incorporating the epoxy groups into the polymerised acrylate matrix via an epoxidised acrylate monomer, rather than via the mere addition of an epoxy resin. Moreover the novolac epoxy resin DEN 438 is difficult to incorporate into the acrylate monomer.

Example 6

The effect of replacing the chlorosulphonated polyethylene (Hypalon®) with other non-acid releasing elastomers was investigated by substituting in place of the chlorosulphonated polyethylene various other elastomers viz. a styrene-butadiene block copolymer Cariflex® TR 1111 (Shell), polyurethane, Estane® 5716 and Estane® 5712 (Goodrich) and a poly(ethyl methacrylate) Elvacite® 2042 (DuPont). The results obtained were as follows:

| Hypalon substitute | 15% replacement of MMA | Lap shear $MNm^{-2}$ | | Peel strength N/25 mm | |
|---|---|---|---|---|---|
| | | 24h cure 23°C | After 1h 180°C tested at room temperature | 24h cure 23°C | After 1h 180°C tested at room temperature |
| Cariflex® TR 1111 | DCPOEME<br>DCPOEM | 4.3<br>3.6 | 7.0<br>8.5 | 25<br>15 | 0<br>— |
| Estane® 5716 | DCPOEME<br>DCPOEM | 13.6<br>11.5 | 7.8<br>5.8 | 167<br>165 | 0<br>0 |
| Estane® 5712 | DCPOEME<br>DCPOEM | 14.7<br>19.0 | 5.9<br>— | 196<br>150 | 0<br>— |
| Elvacite® 2042 | DCPM | 12.0 | 4.6 | 62 | 0 |

These results demonstrate the importance of a polymer, such as chlorosulphonated polyethylene, which releases acid upon heating and which therefore catalyses the opening of the epoxy groups incorporated into the acrylate matrix via the epoxidised acrylate monomer, during exposure of the cured adhesive to elevated temperatures, thus increasing the cross-linking density and contributing to the increase in hot strength of the adhesive. The disappearance of the epoxy groups during exposure of the adhesive to elevated temperature has been monitored by infra-red analysis. Besides chlorosulphonated polyethylene, other suitable acid releasing polymers are polyvinyl chloride, chloroprene, and sulphonyl chloride group containing polymers such as acrylonitrile/butadiene and styrene/butadiene copolymers containing pendant or terminal sulphonyl chloride ($—SO_2Cl$) groups. Such acid releasing polymers are generally those which are known to require an acid scavenger for thermal stability.

Example 7

To investigate the effect of increasing concentrations of DCPME, three adhesive compositions were formulated taking as the basic composition Composition A as defined in Example 1, and substituting 15.6%, 26.4% and 39.5% by weight DCPME in place of the same amount of MMA. Using Vanax® 808 as the initiator, the following results have been obtained.

| | | %DCPME | |
|---|---|---|---|
| | 15.6% | 26.4% (DCPME:MMA =1:1) | 39.5% (DCPME:MMA =3:1) |
| Ultimate thick lap shear strength, 50.8 µm gap | 23.8 $MNm^{-2}$ | 25.7 $MNm^{-2}$ | 20.5 $MNm^{-2}$ |
| Hot strength after 1h, 180°C | 2.3 $MNm^{-2}$ | 4.6 $MNm^{-2}$ | 8.0 $MNm^{-2}$ |
| Strength at room temperature after 1h, 180°C | 27.6 $MNm^{-2}$ | 25.7 $MNm^{-2}$ | 26.1 $MNm^{-2}$ |
| T Peel strength, 50.8 µm gap N/25 mm | 197 | 156 | 99 |
| T Peel strength at room temperature after 1h, 180°C | 152 | 166 | 147 |

Example 8

A further range of compositions according to this invention, Compositions D to H, were prepared and evaluated using Vanax® 808 as the initiator as indicated in the following table.

| Composition % by weight | D | E | F | G | H |
|---|---|---|---|---|---|
| DCPME | 15.60 | 26.40 | 39.50 | 52.80 | — |
| GMA | — | — | — | — | 15.60 |
| ATM-2 | 0.99 | 0.99 | 0.99 | 0.99 | 0.99 |
| MMA | 37.10 | 26.40 | 13.20 | — | 37.10 |
| BHT | 0.21 | 0.21 | 0.21 | 0.21 | 0.21 |
| Hypalon® 20 | 34.60 | 34.60 | 34.60 | 34.60 | 34.60 |
| MAA | 9.90 | 9.90 | 9.90 | 9.90 | 9.90 |
| CHP | 0.52 | 0.52 | 0.52 | 0.52 | 0.52 |
| Silane A187 | 1.04 | 1.04 | 1.04 | 1.04 | 1.04 |
| Shear, steel, $MNm^{-2}$ | 23.80 | 25.70 | 20.50 | 1.32 | 12.70 |
| Shear, aluminium, $MNm^{-2}$ | — | — | — | — | 18.50 |
| Hot strength, steel, $MNm^{-2}$ | 2.30 | 4.60 | 8.00 | 4.10 | 1.10 |
| Hot strength, aluminium, $MNm^{-2}$ | — | — | — | — | 2.70 |
| Strength after heat soak, steel, $MNm^{-2}$ | 27.60 | 25.70 | 26.10 | 15.10 | 3.80 |
| Strength after heat soak, aluminium, $MNm^{-2}$ | — | — | — | — | 15.60 |
| Peel strength, aluminium, N/25 mm | 197.00 | 156.00 | 97.00 | 10.00 | 167.00 |
| Peel after heat soak, N/25 mm | 152.00 | 166.00 | 147.00 | 91.00 | 146.00 |

DCPME: epoxidised dicyclopentenyl methacrylate
GMA: glycidyl methacrylate
ATM-2: triethylene glycol dimethacrylate
MMA: methyl methacrylate
BHT: butylated hydroxy toluene
Hypalon® 20: chlorosulphonated polyethylene
MAA: methacrylic acid
CHP: cumene hydroperoxide
Shear, steel, $MNm^{-2}$—strength after 24 hour cure at 25°C, steel laps, bond line thickness 50.8 µm.
Shear, aluminium, $MNm^{-2}$—as above but aluminium laps.
Hot strengths—measured at 180°C after exposure to 180°C for 1 hour.
Strengths after heat soak—measured at 25°C after exposure to 180°C for 1 hour.

The results indicate that DCPME can usefully be used to replace all of the methyl methacrylate in the formulation, Composition G. However, when all of the MMA is replaced by DCPME a brittle system results from a room temperature cure, but the system does have useful hot strength with toughness developing after exposure to 180°C. This does tend to support the theory of the DCPME grafting to the Hypalon® during the heating process. The lack of toughness after a room temperature cure we suspect resulted from essentially homopolymerisation of DCPME with little or no grafting to the rubber.

Composition H shows that GMA also gives a system which although of lower strength does perform in a similar way to the equivalent DCPME based system. However, as in all these systems the results are to some extent substrate dependent. For example, the GMA system appears to be better on aluminium than on steel, whilst DCPME is better on steel.

Example 9

In a further series of experiments, the effect of DCPME and glycidyl methacrylate (GMA) on the hot strength and other properties of typical acrylate based anaerobic compositions containing an acid releasing elastomer (Hypalon® 20) as a toughening agent, Compositions I, J and K, as well as typical acrylate based anaerobic compositions containing a non-acid-releasing polymer as the toughening agent, viz: Hycar® VTBNX, a vinyl-terminated butadiene-acrylonitrile copolymer. The results are presented in the following table.

| Composition (parts by weight) | I | J | K | L | M | N |
|---|---|---|---|---|---|---|
| Tetrahydrofurfuryl methacrylate | 82.60 | 82.60 | 82.60 | 39.10 | 39.10 | 39.10 |
| Hydroxy ethyl methacrylate | — | — | — | 24.30 | 24.30 | 24.30 |
| Hypalon® 20 | 5.00 | 5.00 | 5.00 | — | — | — |
| Hycar® VTBNX | — | — | — | 24.30 | 24.30 | 24.30 |
| Methacrylic acid | 5.00 | 5.00 | 5.00 | 3.00 | 3.00 | 3.00 |
| Cumene hydroperoxide | 2.00 | 2.00 | 2.00 | 2.00 | 2.00 | 2.00 |
| Saccharin | 1.00 | 1.00 | 1.00 | 2.00 | 2.00 | 2.00 |
| NN dimethyl-p-toluidine | 0.30 | 0.30 | 0.30 | 0.70 | 0.70 | 0.70 |
| Fumed silica | 3.00 | 3.00 | 3.00 | 3.00 | 3.00 | 3.00 |
| Polyethylene glycol 200 | 1.00 | 1.00 | 1.00 | 1.00 | 1.00 | 1.00 |
| Dicyclopentenyl methacrylate epoxide | — | 15.00 | — | — | 15.00 | — |
| Glycidyl methacrylate | — | — | 15.00 | — | — | 15.00 |
| 24h cure lap shear strength MPa | 19.80 | 20.60 | 7.00 | 13.80 | 10.20 | 4.80 |
| Lap shear strength, hot at 180°C | 0.16 | 0.34 | 0.76 | 0.16 | 0.20 | 0.20 |
| Lap shear strength at room temperature after 1h at 180°C | 3.30 | 6.40 | 16.90 | 5.20 | 4.90 | 11.10 |

Compared with the standard anaerobic formulation, Composition I, the addition of 15% DCPME (Composition J) and 15% GMA (Composition K) show a modest increase in the hot strength of the cured composition, thus indicating applicability of the present invention to other acrylic adhesive systems, i.e. anaerobic systems, as well as two part acrylic systems.

These results also further demonstrate the importance of the acid-releasing polymer, since the 15% DCPME and 15% GMA additions (Compositions M and N) to a conventional anaerobic formulation (Composition L) containing a low molecular weight vinyl-terminated butadiene-acrylonitrile elastomer (Hycar® VTBNX) as the toughening agent show no significant increase in the hot strength of the composition.

**Claims**

1. A curable acrylic adhesive composition, which may be either a one-part or two-part composition, such composition consisting essentially of a polymerisable mixture of acrylic monomers comprising one or more acrylate or methacrylate esters and optionally one or more of acrylic or methacrylic acid, said polymerisable mixture having in solution therein a chlorosulphonated polyethylene or other acid releasing polymer as a toughening agent for the cured adhesive, and a free radical initiator and accelerator system capable, when mixed with the monomeric component of the adhesive composition, of initiating the polymerisation of the monomeric component, characterised in that the polymerisable mixture of acrylic monomers contains from 2.5 to 83% by weight, based on the total monomer weight, of an epoxidised acrylate or methacrylate as a comonomer effective to increase the hot strength of the cured composition.

2. A composition according to claim 1, characterised in that the epoxidised monomer is glycidyl acrylate or methacrylate or an epoxidised dicyclopentenyl acrylate or methacrylate or an epoxidised dicyclopentenyloxy ($C_1$—$C_5$) alkyl acrylate or methacrylate.

3. A composition according to claim 1, characterised in that the epoxidised monomer is epoxidised dicyclopentenyl methacrylate.

4. A composition according to claim 1, characterised in that the epoxidised monomer is epoxidised dicyclopentenyloxyethyl methacrylate.

5. A composition according to any one of claims 1—4, characterised in that the epoxidised monomer is present in an amount of from 5 to 50% by weight, based on the total weight of acrylic monomers.

6. A composition according to claim 5, characterised in that the balance of the acrylic monomer component comprises one or more acrylate esters selected from alkyl, cycloalkyl, alkoxyalkyl and hydroxyalkyl acrylates and methacrylates, and alkylene and polyalkylene diacrylates and dimethylacrylates, and optionally acrylic or methacrylic acid.

7. A composition according to claim 6, characterised in that the balance of the acrylic monomer component comprises one or more of the following: a $C_1$—$C_8$ alkyl acrylate or methacrylate a $C_2$—$C_3$ hydroxyalkyl acrylate or methacrylate, a $C_1$—$C_5$ alkoxy ($C_1$—$C_5$) alkyl methacrylate, lauryl methacrylate, tetrahydrofurfuryl methacrylate, isobornyl methacrylate, or a poly($C_2$—$C_3$)alkylenedimethacrylate and optionally acrylic or methacrylic acid.

8. A composition according to claim 6, characterised in that the balance of the acrylic component comprises one or more of the following: methyl methacrylate, isobornyl methacrylate, 2-ethoxyethyl methacrylate, tetrahydrofurfuryl methacrylate or triethyleneglycol dimethylacrylate, and, in addition thereto, methacrylic acid.

9. A composition according to any one of claims 1—8 which is a two part adhesive comprising, as the first part, a solution of said polymer in a polymerisable acrylate ester consisting of or comprising said epoxidised acrylate or methacrylate, and comprising a free radical initiator system, and as the second part, an accelerator therefor.

10. A two part acrylic adhesive or sealant composition comprising, as the first part, a solution of chlorosulphonated polyethylene in an acrylic monomer component containing (a) one or more of the following: methyl methacrylate, 2-ethoxyethyl methacrylate, isobornyl methacrylate, tetrahydrofurfuryl methacrylate, and triethyleneglycol dimethacrylate, and (b) methacrylic acid, and containing a free radical initiator system, and, as the second part, an accelerator composition comprising an amine-aldehyde condensate, characterised in that the acrylic monomer component additionally contains up to 50% by weight, based on the total monomer weight of epoxidised dicyclopentenyl methacrylate or epoxidised dicyclopentenyloxythyl methacrylate.

11. A composition according to claim 10, in which the first part comprises a solution of chlorosulphonated polyethylene in an acrylic monomer component containing methyl methacrylate, methacrylic acid, triethyleneglycol dimethacrylate and from 5 to 40% by weight, based on the total weight of acrylic monomers, of epoxidised dicylopentenyl methacrylate.

**Patentansprüche**

1. Härtbare Acrylkleberzusammensetzung, die entweder eine Einkomponenten- oder eine Zweikomponentenzusammensetzung sein kann und im wesentlichen aus einem polymerisierbaren Gemisch von Acrylmonomeren, die ein oder mehrere Acrylat- oder Methacrylatester und gegebenenfalls ein oder mehrere von Acrylsäure oder Methacrylsäure umfassen, wobei dieses polymerisierbare Gemisch in Lösung darin ein chlorsulfoniertes Polyethylen oder anderes Säure freisetzendes Polymer als zähmachendes Mittel für den gehärteten Kleber hat, und einem freie Radikale ergebenden Initiator- und Beschleunigersystem, das beim Vermischen mit der monomeren Komponente der Kleberzusammensetzung die Polymerisation der monomeren Komponente einleiten kann, besteht, dadurch gekennzeichnet, daß das polymerisierbare Gemisch von Acrylmonomeren 2,5 bis 83 Gew.-%, bezogen auf das gesamte Monomerengewicht, eines epoxidierten Acrylats oder Methacrylats als Comonomeres, das wirksam ist, die Hitzefestigkeit der gehärteten Zusammensetzung zu steigern, enthält.

2. Zusammensetzung nach Anspruch 1, dadurch gekennzeichnet, daß das epoxidierte Monomere Glycidylacrylat oder -methacrylat oder ein epoxidiertes Dicyclopentenylacrylat oder -methacrylat oder ein epoxidiertes Dicyclopentenyloxy-($C_1$—$C_5$)-alkylacrylat oder -methacrylat ist.

3. Zusammensetzung nach Anspruch 1, dadurch gekennzeichnet, daß das epoxidierte Monomere epoxidiertes Dicyclopentenylmethacrylat ist.

4. Zusammensetzung nach Anspruch 1, dadurch gekennzeichnet, daß das epoxidierte Monomere epoxidiertes Dicyclopentenyloxyethylmethacrylat ist.

5. Zusammansetzung nach einem der Ansprüche 1 bis 4, dadurch gekennzeichnet, daß das epoxidierte Monomere in einer Menge von 5 bis 50 Gew.-%, bezogen auf das Gesamtgewicht der Acrylmonomeren, vorliegt.

6. Zusammensetzung nach Anspruch 5, dadurch gekennzeichnet, daß der Rest der Acrylmonomerkomponente ein oder mehrere Acrylatester aus der Gruppe der Alkyl-, Cycloalkyl-, Alkoxyalkyl- und Hydroxyalkylacrylate und -methacrylate und Alkylen- und Polyalkylendiacrylate und

-dimethylacrylate und gegebenenfalls Acrylsäure oder Methacrylsäure umfaßt.

7. Zusammensetzung nach Anspruch 6, dadurch gekennzeichnet, daß der Rest der Acrylmonomerkomponente eine oder mehrere der folgenden Verbindungen umfaßt: ein $C_1$—$C_8$-Alkylacrylat oder -methacrylat, ein $C_2$—$C_3$-Hydroxyalkylacrylat oder -methacrylat, ein $C_1$—$C_5$-Alkoxy-($C_1$—$C_5$)-alkylmethacrylat, Laurylmethacrylat, Tetrahydrofurfurylmethacrylat, Isobornylmethacrylat oder ein Poly-($C_2$—$C_3$)-alkylendimethacrylat und gegebenenfalls Acrylsäure oder Methacrylsäure.

8. Zusammensetzung nach Anspruch 6, dadurch gekennzeichnet, daß der Rest der Acrylkomponente eines oder mehrere der folgenden umfaßt: Methylmethacrylat, Isobornylmethacrylat, 2-Ethoxyethylmethacrylat, Tetrahydrofurfurylmethacrylat oder Triethylenglycoldimethacrylat und außerdem Methacrylsäure.

9. Zusammensetzung nach einem der Ansprüche 1 bis 8, die ein Zweikomponentenkleber ist und als die erste Komponente eine Lösung des Polymers in einem polymerisierbaren Acrylatester, der aus dem epoxidierten Acrylat oder Methacrylat besteht oder es umfaßt und ein freies radikale ergebendes Initiatorsystem umfaßt, und als die zweite Komponente einen Beschleuniger hierfür aufweist.

10. Zweikomponentenacrylkleber- oder -dichtungsmittelzusammensetzung, die als die erste Komponente eine Lösung von chlorsulfoniertem Polyethylen in einer Acrylmonomerkomponente aufweist, welche (a) eines oder mehrere der folgenden: Methylmethacrylat, 2-Ethoxyethylmethacrylat, Isobornylmethacrylat, Tetrahydrofurfurylmethacrylat und Triethylenglycoldimethylacrylat, und (b) Methacrylsäure enthält und ein freies Radikale ergebendes Initiatorsystem enthält und als die zweite Komponente eine Beschleunigerzusammensetzung hat, die ein Amin-Aldehydkondensat umfaßt, dadurch gekennzeichnet, daß die Acrylmonomerkomponente zusätzlich bis zu 50 Gew.-%, bezogen auf das Gesamtmonomergewicht, epoxidiertes Dicyclopentenylmethacrylat oder epoxidiertes Dicyclopentenyloxyethylmethacrylat enthält.

11. Zusammensetzung nach Anspruch 10, in der die erste Komponente eine Lösung von chlorsulfoniertem Polyethylen in einer Acrylmonomerkomponente umfaßt, welche Methylmethacrylat, Methacrylsäure, Triethylenglycoldimethacrylat und 5 bis 40 Gew.-%, bezogen auf das Gesamtgewicht von Acrylmonomeren, an epoxidiertem Dicyclopentenylmethacrylat enthält.

**Revendications**

1. Composition adhésive acrylique réticulable qui peut être une composition en une ou deux parties, cette composition consistant essentiellement en un mélange polymérisable de monomères acryliques comprenant un ou plusieurs esters acryliques ou méthacryliques et éventuellement un ou plusieurs acides acryliques ou méthacryliques, ce mélange polymérisable renfermant en solution un polyéthylène chlorosulfoné ou un autre polymère libérant un acide comme agent durcisseur de l'adhésif réticulé et un initiateur à radical libre ainsi qu'un système accélérateur capable, lorsqu'il est mélangé au constituant monomère de la composition adhésive, d'initier la polymérisation de ce constituant monomère, composition caractérisée en ce que le mélange polymérisable des monomères acryliques renferme de 2,5 à 83% en poids, par rapport au poids total des monomères, d'un acrylate ou méthacrylate époxydé comme comonomère actif pour améliorer la résistance à la chaleur de la composition réticulée.

2. Composition selon la revendication 1, caractérisée en ce que le monomère époxydé est l'acrylate ou le méthacrylate de glycidyle ou un acrylate ou méthacrylate de dicyclopentenyle époxydé ou un acrylate ou méthacrylate de dicyclopentenyloxyalkyle en ($C_1$—$C_5$)époxydé.

3. Composition selon la revendication 1, caractérisée en ce que le monomère époxydé est le méthacrylate de dicyclopentenyle époxydé.

4. Composition selon la revendication 1, caractérisée en ce que le monomère époxydé est le méthacrylate de dicyclopentenyloxyéthyle.

5. Composition selon l'une quelconque des revendications 1 à 4, caractérisée en ce que le monomère époxydé est présent à raison de 5 à 50% en poids par rapport au poids total des monomères acryliques.

6. Composition selon la revendication 5, caractérisée en ce que le reste des constituants monomères acryliques comprend un ou plusieurs esters acryliques choisis parmi les acrylates ou méthacrylates d'alkyle, de cycloalkyle, d'alkoxyalkyle ou d'hydroxyalkyle et/ou parmi les diacrylates ou diméthacrylates de polyalkylène et/ou éventuellement parmi les acides acryliques ou méthacryliques.

7. Composition selon la revendication 6, caractérisée en ce que le reste des constituants monomères acryliques comprend un ou plusieurs des monomères suivants: acrylate ou méthacrylate d'alkyle en ($C_1$—$C_8$), acrylate ou méthacrylate d'hydroxyalkyle, en ($C_2$—$C_3$), méthacrylate d'alkoxy ($C_1$—$C_5$) alkyl ($C_1$—$C_5$), méthacrylate de lauryle, méthacrylate de tétrahydrofurfuryle, méthacrylate d'isobornyle ou diméthacrylate de polyalkylène en ($C_2$—$C_3$) et éventuellement acide acrylique ou méthacrylique.

8. Composition selon la revendication 6, caractérisé en ce que le reste des constituants acryliques comprend un ou plusieurs des monomères suivants: méthacrylate de méthyle, méthacrylate d'isobornyle, méthacrylate de 2-éthoxyéthyle, méthacrylate de tétrahydrofurfuryle ou diméthacrylate de triéthylèneglycol et, en plus, acide méthacrylique.

9. Composition selon l'une quelconque des revendications 1 à 8 qui est une composition adhésive en deux parties, caractérisée en ce qu'elle comprend, en tant que première partie, une solution dudit polymère dans un ester acrylique polymérisable consistant en ou comprenant ledit acrylate ou méthacrylate époxydé

et comprenant un système initiateur à radicaux libres et, en tant que seconde partie, un accélerateur de polymérisation.

10. Composition adhésive ou mastique acrylique en deux parties comprenant, en tant que première partie une solution de polyéthylène chlorosulfoné dans un composant acrylique renfermant (a) un ou plusieurs des monomères suivants: méthacrylate de méthyle, méthacrylate de 2-éthoxyéthyle, méthacrylate d'isobornyle, méthacrylate de tétrahydrofurfuryle et diméthacrylate de triéthylèneglycol et (b) de l'acide méthacrylique et contenant un système initiateur à radicaux libres et, en tant que seconde partie, une composition d'accélérateur comprenant un condensat amine-aldéhyde, composition, caractérisée en ce que le constituant monomère acrylique contient en plus jusqu'à 50% en poids, par rapport au poids total des monomères de méthacrylate de dicyclopentenyle époxydé ou méthacrylate de dicyclopentenyloxyéthyle époxydé.

11. Composition selon la revendication 10, caractérisée en ce que la première partie comprend une solution de polyéthylène chlorosulfoné dans un constituant monomère acrylique contenant du méthacrylate de méthyle, de l'acide méthacrylique, du dimethacrylate de triéthylène glycol et de 5 à 40% en poids, par rapport au poids total des monomères acryliques, de méthacrylate de dicyclopentenyle époxydé.